# EUROPEAN PATENT APPLICATION

(11) **EP 4 138 283 A1**
(43) Date of publication of application: **22.02.2023**
(21) Application number: 21382771.0
(22) Date of filing: 20.08.2021
(51) Int. Cl.: H02K 15/03, H02K 1/278, H02K 1/2791, H02K 1/02

(54) **PERMANENT MAGNET MODULE FOR A PERMANENT MAGNET MACHINE**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The present invention describes a method (1001, 1101) of manufacturing a permanent magnet module (101) for a permanent magnet machine (10), the method comprising the steps of:
- providing at least a permanent magnet (200),
- manufacturing a cover (601) for covering the permanent magnet (200), the cover (601) comprising a stainless steel, wherein the cover (601) includes at least a top side (602) and two lateral sides (603, 604), the magnetic permeability of the top side (602) being higher than the magnetic permeability of the lateral sides (603, 604), the lateral sides (603, 604) being respectively attached to a first and a second edge (604, 605) of the top side (602), the lateral sides (603, 604)being angled with respect to the top side (602),
- attaching the cover (601) to the permanent magnet (200).

## Description

### Field of invention

The present invention relates to a method of manufacturing a permanent magnet module including a magnet for a permanent magnet machine and a cover.

### Art Background

An electric machine, such as an electric generator installed in a wind turbine, typically comprises a rotor which rotates relative to a stator around a rotational axis. Stator and rotor are separated from each other by an airgap, circumferentially extended around the rotational axis. The airgap provides the necessary distance in order to be sure the rotating part are not getting in contact with the stationary part. In a permanent-magnet electric machine the stator typically includes a body having stator radial slots longitudinally extending along an axial direction of the stator and an electric circuit comprising a plurality of copper windings housed in the slots.

The rotor comprises a plurality of permanent magnets modules, each module including a baseplate and one or more permanent magnets attached to the baseplate. The baseplate is attached to the rotor body, so that, in operation, the baseplate is interposed between the respective magnet and the rotor body. In each magnet module a cover is typically provided over the permanent magnet(s) to encapsulate the permanent magnet(s) and hold them in place. The cover may be made of stainless steel, or any other materials welded or fixed by other means to the respective baseplate. More particularly, the cover may be made of austenitic stainless steel, in order to hold the magnet in place and to avoid corrosion. The cover made of non-magnetic material adds a further distance to the magnetic airgap between the stator and the permanent magnets. Due to the addition of magnetic distance between the rotating and the stationary part of the electrical machine the induced voltage is lower. Due to this the current in the machine needs to be higher to maintain the torque/electrical power. This influence leads to less efficiency of the electrical machine.

It is therefore desirable to provide a method of manufacturing a permanent magnet module, which may efficiently at the same maintain the advantages and remove the inconveniences, which are described above with reference to the permanent magnet modules of the prior art.

### Summary of the Invention

This objective may be solved by the permanent magnet module manufactured according to the method of the independent claim. Advantageous embodiments of the present invention are described by the dependent claims.

According to the present invention a method of manufacturing a permanent magnet module for a permanent magnet machine is provided. The method comprising the steps of:
- providing at least a permanent magnet,
- manufacturing a cover for covering the permanent magnet, the cover comprising a stainless steel, wherein the cover includes at least a top side and two circumferential lateral sides, the magnetic permeability of the top side being higher than the magnetic permeability of the lateral sides, the lateral sides being respectively attached to a first and a second edge of the top side, the lateral sides being angled with respect to the top side,
- attaching the cover to the permanent magnet.
The top side includes at least a first stainless-steel phase, and the two circumferential lateral sides include at least a second stainless-steel phase.

As "top side" it is meant the side of the permanent magnet module facing the airgap. As "circumferential lateral side" it is meant any lateral side extending along the axis of the permanent magnet module which is subject to be in operation aligned or parallel to the rotational axis of the permanent magnet machine. A section of the top side and of the circumferential lateral side is to be seen in a circumferential section of the permanent magnet module, i.e. a section which in operation is orthogonal to the rotational axis of the permanent magnet machine. The permanent magnet module further includes two axial sides, at the two respective axial end parallel to the above-defined circumferential section. The two axial sides may have either a low, high or mixed magnetic permeability, depending on the desired performance and the manufacturing methods. The two axial sides may have, in particular, the same magnetic permeability of the top side or of the lateral sides. As "phase" it is meant a region of space throughout which physical properties, in particular the magnetic permeability, of the stainless steel are essentially uniform. As "phase" may be, for example, meant ferrite or austenite or martensite. A first stainless-steel phase may be achieved using a first stainless-steel while the second stainless-steel phase may be achieved through the use of a second stainless-steel. Alternatively, the first stainless-steel phase and the second stainless-steel phase may be two different phases of the same stainless-steel.

The permanent magnet machine may be an electrical generator. Particularly, but not exclusively, the electrical generator may be used in a wind turbine.

Due to a higher magnetic permeability in the first stainless-steel phase than in the second stainless-steel phase the effective magnetic airgap between the stator and the magnets of the permanent magnet module can be reduced, at the same mechanical airgap. The magnetic reluctance in the electrical machine is consequently reduced and the induced voltage in the permanent magnet machine is increased.

In an electrical generator the current and thereby the losses can be reduced for the same power output, or the power output can be increased at the same current and losses. Therefore, a higher annual energy production (AEP) is to be expected. Higher performance (torque density) is achieved and consequently lower levelized cost of energy (LCoE) can be obtained. A further advantage might be a cost reduction of the magnet module.

According to embodiments of the present invention, the first stainless-steel phase is a magnetic phase. The first stainless-steel phase may be ferritic or martensitic.

According to embodiments of the present invention, the second stainless-steel phase is a non-magnetic phase. The second stainless-steel phase may be an austenitic stainless steel.

The choice for the stainless steels to be used may be based on the magnetic performances. The magnetic steels of the AISI series 4 (or example 434 ferritic or 431 martensitic steel) may be chosen for the first stainless-steel phase. For the second stainless-steel phase, the non-magnetic steels of the AISI series 3 (for example 304 and 316L) or AISI series 2 (for example 201 or 204) may be chosen. The non-magnetic steels of the AISI series 3 or AISI series 2 may be deformed locally to obtain the first stainless-steel phase.

The above-define materials fulfil the following requirements:
- good corrosion protection,
- good weldability between dissimilar stainless steels,
- good magnetic properties only where required.

According to possible embodiments of the invention, the step of manufacturing the cover comprises:
- manufacturing a first sheet comprising the first stainless-steel phase and having two main longitudinal edges,
- manufacturing a second and a third sheet comprising the second stainless-steel phase,
- attaching the second and the third sheet to the two main longitudinal edges, respectively, to obtain an assembly sheet,
- cutting at least a semifinished product from the assembly sheet, the semifinished product including a portion of the first sheet, a portion of the second sheet and a portion of the third sheet,
- bending the portion of the second sheet and the portion of the third sheet with respect to the portion of the first sheet for deriving the cover from the semifinished product so that the portion of the first sheet corresponds to the top side and the portions of the second sheet and the third sheet respectively correspond to the lateral sides.

The second and the third sheet may be attached to the two main longitudinal edges by welding, for example by TIG or laser welding.

According to possible embodiments of the invention, the step of manufacturing the cover comprises:
- manufacturing a semifinished sheet comprising the second stainless steel phase,
- deforming locally the semifinished sheet along a deformation direction for transforming the second stainless steel phase into the first stainless steel phase to obtain an assembly sheet having a first sheet comprising the first stainless-steel phase and a second and a third sheet comprising the second stainless-steel phase, the second and the third sheet being provided along two respective main longitudinal edges of the first sheet,
- cutting at least a semifinished product from the assembly sheet, the semifinished product including a portion of the first sheet a portion of the second sheet and a portion of the third sheet,
- bending the portion of the second sheet and the portion of the third sheet with respect to the portion of the first sheet for deriving the cover from the semifinished product so that the portion of the first sheet corresponds to the top side and the portions of the second sheet and the third sheet correspond to the lateral sides.

Deforming locally the semifinished sheet may comprise an operation of deep rolling or burnishing or hammer peening.

According to such embodiments, a phase metastable nature is utilized, which is to be found, for example, in lean austenitic stainless steels. This metastable nature gives the possibility to mechanically transform part of the austenite into martensite which have more desirable magnetic properties, according to the invention. The transformation-through-deformation process could either be introduced directly on the semifinished sheet or after the cover has been stamped into shape. The deformation process can be done locally such that only the part of the cover facing the stator will transform partly into the first stainless-steel phase, e.g., martensite, leaving the lateral sides of the cover into the second stainless-steel phase, e.g. austenite, which is desirable for the performance. The amount of martensite depends on processing parameters such as the stress state of the material, temperature and rate of deformation. The austenitic stainless-steel phase composition and hence the stacking fault energy have also an influence on the obtained microstructure.

According to possible embodiments of the invention, the step of manufacturing the cover comprises an operation of additive manufacturing. Different powder materials can used to fabricate each area of the cover. According to possible embodiments of the invention, the additive manufacturing could be made directly on the magnets, so eliminating extra manufacturing steps.

According to possible embodiments of the invention, the cover may be thinner at the top side and thicker at the lateral sides if a non-magnetic stainless-steel phase is used. According to other possible embodiments of the invention, the cover may be thicker at the top of magnet and thinner on the lateral sides if a magnetic stainless-steel steel phase is used. Such thickness features may be achieved by the above-described embodiment of the method of the present invention.

### Brief Description of the Drawings

The aspects defined above, and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine.
Fig. 2 shows a cross-sectional view of a permanent magnet machine including a plurality of permanent magnet modules.
Fig. 3 shows a frontal circumferential view of a cover for a permanent magnet module manufactured according to the present invention.
Fig. 4 shows a frontal circumferential view of a permanent magnet module including the cover of Fig. 3.
Fig. 5 shows steps of a first embodiment of a method for manufacturing the cover of Fig. 3.
Fig. 6 shows steps of a second embodiment of a method for manufacturing the cover of Fig. 3.
Fig. 7 is a block diagram showing steps of the first embodiment of the method.
Fig. 8 is a block diagram showing steps of the second embodiment of the method.

### Detailed Description

The illustrations in the drawings are schematically. It is noted that in different figures, similar or identical elements are provided with the same reference signs.

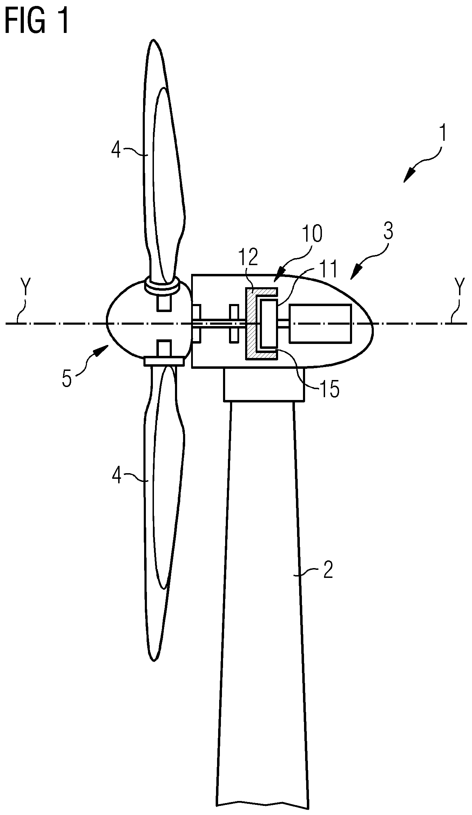

**Figure 1** shows a partial cross-sectional view of a wind turbine 1 comprising a tower 2 which is mounted on the ground at one end and a nacelle 3 which is mounted at the opposite end of the tower 2. The nacelle 3 is rotatably mounted over the tower 2. The nacelle 3 accommodates a permanent magnet machine 10, i.e. an electrical generator, which includes a permanent magnet module according to the invention. Furthermore, the wind turbine 10 comprises a hub 5 which is rotatable about a rotor axis Y. When not differently specified, the terms axial, radial and circumferential in the following are made with reference to the rotor axis Y. The wind turbine 1 further comprises at least one blade 4 (in the embodiment of Figure 1, the wind rotor comprises three blades 4, of which only two blades 4 are visible) mounted on the hub 5. The blades 4 extend substantially radially with respect to the rotational axis Y. The permanent magnet machine 10 includes a stator 11 and a rotor 12. The rotor 12 is rotatable with respect to the stator 11 about a longitudinal axis of the permanent magnet machine 10. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap 15 is provided between the stator 11 and the rotor 12.

According to other possible embodiments of the present invention (not represented in the attached figures), the present invention may be applied to any type of permanent magnet electric machines, e.g. radial, axial, etc. The present invention may be applied also to integral-slot electric permanent magnet machine.

A plurality of permanent magnets modules (not visible in Figure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

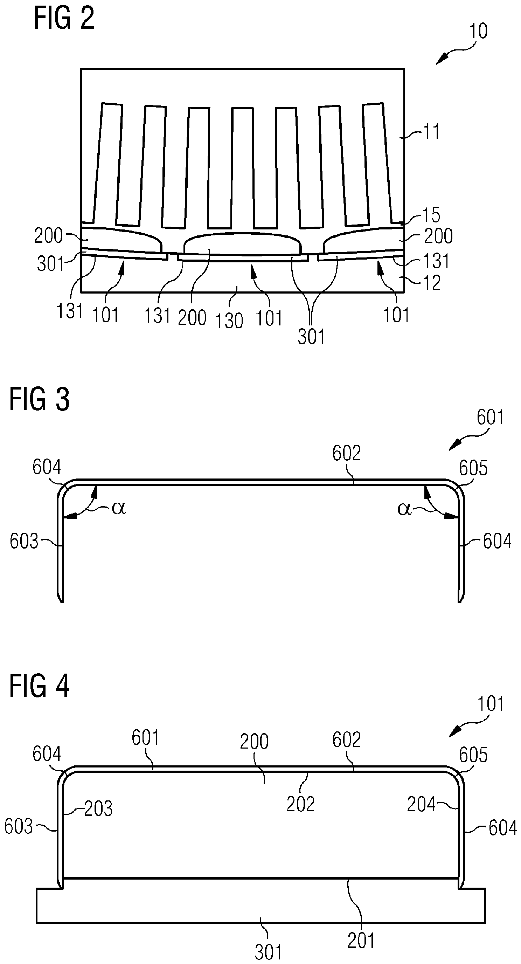

**Figure 2** shows a partial cross-sectional view of the permanent magnet machine 10 including a plurality of permanent magnet modules 101 attached to the rotor 12. The permanent magnet modules 101 are attached to a side of the rotor 12 which faces the stator 11. Each permanent magnet module 101 comprises a permanent magnet 200 and a baseplate 301. According to other embodiment of the present invention (not shown), each permanent magnet module 101 may comprise more than one permanent magnet 200 and more than one baseplate 301. Each of the permanent magnets 200 is attached to a rotor body 130 of the rotor 12 by means of the respective base plate 301. Each base plate 301 of each permanent magnet module 101 is connected to a respective recess 131 provided in the rotor body 130. Each permanent magnets module 101 comprises a respective cover for covering the permanent magnet 200, as detailed in the following.

**Figure 3** shows a cover 601 for covering the permanent magnet 200. The cover 601 includes a top side 602 and two lateral sides 603, 604. The magnetic permeability of the top side 602 is higher than the magnetic permeability of the lateral sides 603, 604. The lateral sides 603, 604 are respectively attached to a first and a second edge 604, 605 of the top side 602. The first and the second edge 604, 605 may have any shape or form, including round and squared. The lateral sides 603, 604 are angled with respect to the top side 602 according to an angle a, comprised between 45 degrees and 135 degrees. The top side 602 includes at least a first stainless-steel phase and the two lateral sides 603, 604 include at least a second stainless-steel phase, which may be different from the first stainless-steel phase.

The first stainless-steel may be a magnetic stainless-steel phase, for example ferrite or martensite. The second stainless-steel phase may be a non-magnetic stainless-steel phase, for example a austenite.

The first and the second stainless-steel phases may be both non-magnetic phases. In such embodiments the top side 602 is thinner than the lateral sides 603, 604.

The first and the second stainless-steel phases may be both magnetic phases. In such embodiments the top side 602 is thicker than the lateral sides 603, 604.

**Figure 4** shows a circumferential sectional view of a permanent magnet module 101 including a permanent magnet 200 and a respective baseplate 301 attached to the permanent magnet 200. The permanent magnet 200 includes a bottom surface 201 facing the baseplate 301. The bottom surface 201 may be attached to the baseplate 301, for example by gluing. The permanent magnet module 101 further includes the cover 601 covering the permanent magnet 200. The baseplate 301 may comprise the first and/or the second stainless-steel phases. The cover 601 may be welded to the baseplate 301. According to other embodiments of the present invention, the cover 601 may be attached to the baseplate 301 by other means. The permanent magnet 200 includes a top surface 202 opposite to the bottom surface 201 and two lateral surface 203, 204 connecting the bottom surface 201 with the top surface 202. The top side 602 of the cover 601 covers the top surface 202. The two lateral sides 603, 604 of the cover 601 respectively cover the two lateral surfaces 203, 204.

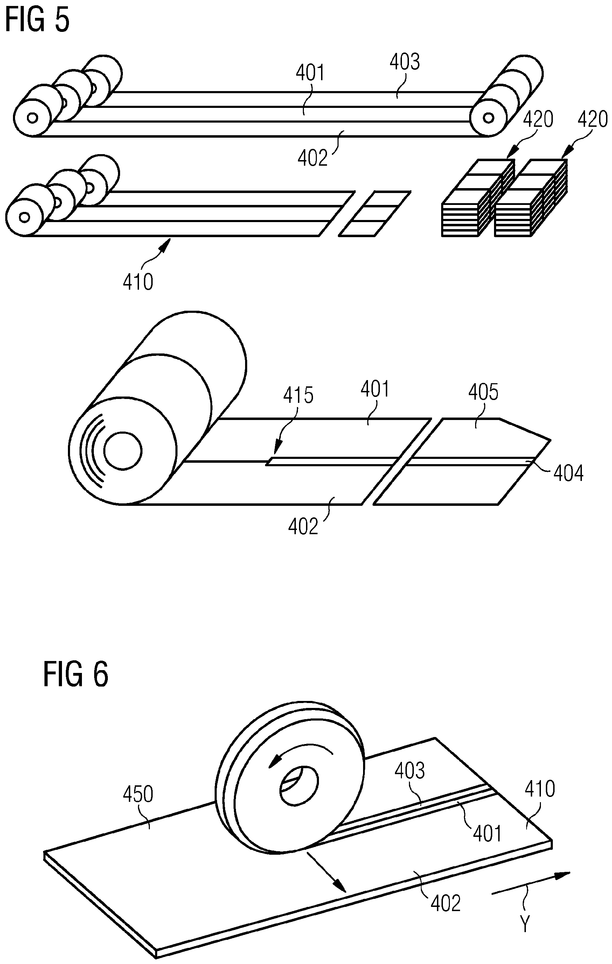

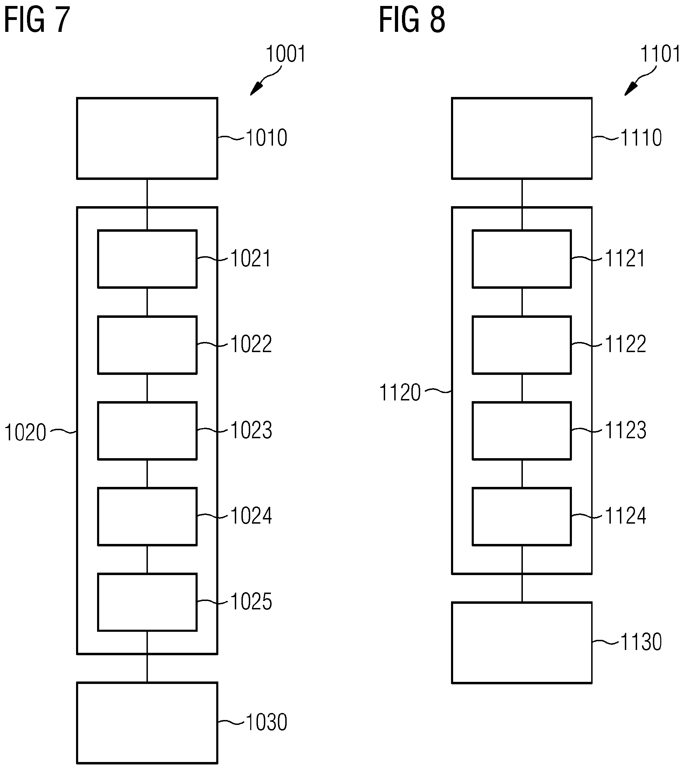

**Figures 5** and **7** illustrate a first embodiment 1001 of a method for manufacturing the cover 601 and the permanent magnet module 101. The first embodiment of the method comprises a first step 1010 of providing one or more permanent magnets 200, a second step 1020 of manufacturing the cover 601 and a third step 1030 of attaching the cover 601 to the permanent magnet 200.

The second step 1020 comprises:
- a first sub-step 1021 of manufacturing a first sheet 401 comprising the first stainless-steel phases and having two main longitudinal edges 404, 405;
- a second sub-step 1022 of manufacturing a second and a third sheet 402, 403 comprising the second stainless-steel phases;
- a third sub-step 1023 of attaching the second and the third sheet 402, 403 to the two main longitudinal edges 404, 405, respectively, to obtain an assembly sheet 410. The second and the third sheet 402, 403 may be joined to the two main longitudinal edges 404, 405 by a welding 415. The welding 415 may be performed through a seam-welding process, for example TIG or laser welding;
- a fourth sub-step 1024 of cutting at least a semifinished product 420 from the assembly sheet 410, the semifinished product 420 including a portion of the first sheet 401, a portion of the second sheet 402 and a portion of the third sheet 403,
- a fifth sub-step 1025 of bending the portion of the second sheet 402 and the portion of the third sheet 403 with respect to the portion of the first sheet 401 for deriving the cover 601 from the semifinished product 420 so that the portion of the first sheet 401 corresponds to the top side 602 and the portions of the second sheet 402 and the third sheet 403 respectively correspond to the lateral sides 603, 604. The bending in performed according to the angle α.

A further optional step may be performed to add further portions of the cover at the axial ends (parallel to the circumferential section of figure 4) of the semifinished product 420. These portions may have, for example, the same composition of the second and third sheets 402, 403 and may be joined to the semi-finished product 420 by the same welding process.

As a variant of the above describe first embodiment of the method, the first sheet 401, the second sheet 402 and the third sheet 403 may comprise the same stainless-steel phase and may have different thicknesses. The first sheet 401 is thinner than the second and the third sheet 402, 403 if a non-magnetic stainless-steel phase is used. The first sheet 401 is thicker than the second and the third sheet 402, 403 if a magnetic stainless-steel phase is used.

**Figures 6** and **8** illustrate a second embodiment 1101 of a method for manufacturing the cover 601 and the permanent magnet module 101. The second embodiment of the method comprises a first step 1110 of providing one or more permanent magnets 200, a second step 1120 of manufacturing the cover 601 and a third step 1130 of attaching the cover 601 to the permanent magnet 200.

The step of manufacturing the cover 601 comprises:
- a first sub-step 1121 of manufacturing a semifinished sheet 450 comprising the second stainless steel,
- a second sub-step 1122 of deforming locally the semifinished sheet 450 along a deformation direction Y for transforming the second stainless steel into the first stainless steel to obtain an assembly sheet 410 having a first sheet 401 comprising the first stainless-steel and a second and a third sheet 402, 403 comprising the second stainless-steel, the second and the third sheet 402, 403 being provided along two respective main longitudinal edges 404, 405 of the first sheet 401. Deforming may be performed through an operation of deep rolling or burnishing or hammer peening;
- a third sub-step 1123 of cutting at least a semifinished product 420 from the assembly sheet 410, the semifinished product 420 including a portion of the first sheet 401 a portion of the second sheet 402 and a portion of the third sheet 403,
- a fourth sub-step 1124 of bending the portion of the second sheet 402 and the portion of the third sheet 403 with respect to the portion of the first sheet 401 for deriving the cover 601 from the semifinished product 420 so that the portion of the first sheet 401 corresponds to the top side 602 and the portions of the second sheet 402 and the third sheet 403 correspond to the lateral sides 603, 604. The bending in performed according to the angle α.

Alternatively to the above described sequence of sub-steps 1121, 1122, 1123, 1124, deforming locally the cover 601 may be performed after forming the top side 602 and the lateral sides 603, 604 from the semifinished sheet 450, for example through bending.

As a variant of the above describe second embodiment of the method, deforming locally the semifinished sheet 450 does not transform the second stainless steel, the second stainless steel being a non-magnetic stainless-steel. The result is semifinished sheet 450 having a first sheet 401 thinner than the second and the third sheet 402, 403.

According to a third embodiment (not shown) of the invention, the step of manufacturing the cover comprises one or more operations of additive manufacturing. Different powder materials can used to fabricate the top side 602 and the lateral sides 603, 604. The additive manufacturing may be made directly on the magnet 200, so eliminating extra manufacturing steps.

According to other embodiments (not shown) of the invention, manufacturing the cover may comprise one or more operations of stamping or die press forming.

## Claims

1. A method (1001, 1101) of manufacturing a permanent magnet module (101) for a permanent magnet machine (10), the method comprising the steps of:
- providing (1010, 1110) at least a permanent magnet (200),
- manufacturing (1020, 1120) a cover (601) for covering the permanent magnet (200), the cover (601) comprising a stainless steel, wherein the cover (601) includes at least a top side (602) and two lateral sides (603, 604), the magnetic permeability of the top side (602) being higher than the magnetic permeability of the lateral sides (603, 604), the lateral sides (603, 604) being respectively attached to a first and a second edge (604, 605) of the top side (602), the lateral sides (603, 604) being angled with respect to the top side (602),
- attaching (1030, 1130) the cover (601) to the permanent magnet (200),
wherein the top side (602) includes at least a first stainless-steel phase and the two lateral sides (603, 604) include at least a second stainless-steel phase.

2. The method (1001) according to claim 1, wherein the step of manufacturing the cover (601) comprises:
- manufacturing a first sheet (401) comprising the first stainless-steel and having two main longitudinal edges (404, 405) ,
- manufacturing a second and a third sheet (402, 403) comprising the second stainless-steel,
- attaching the second and the third sheet (402, 403) to the two main longitudinal edges (404, 405), respectively, to obtain an assembly sheet (410),
- cutting at least a semifinished product (420) from the assembly sheet (410), the semifinished product (420) including a portion of the first sheet (401), a portion of the second sheet (402) and a portion of the third sheet (403),
- bending the portion of the second sheet (402) and the portion of the third sheet (403) with respect to the portion of the first sheet (401) for deriving the cover (601) from the semifinished product (420) so that the portion of the first sheet (401) corresponds to the top side (602) and the portions of the second sheet (402) and the third sheet (403) respectively correspond to the lateral sides (603, 604).

3. The method (1001) according to claim 2, wherein the second and the third sheet (402, 403) are attached to the two main longitudinal edges (404, 405) by welding.

4. The method (1101) according to claim 1, wherein the step of manufacturing the cover (601) comprises:
- manufacturing a semifinished sheet (450) comprising the second stainless steel,
- deforming locally the semifinished sheet (450) along a deformation direction (Y) for transforming the second stainless steel into the first stainless steel to obtain an assembly sheet (410) having a first sheet (401) comprising the first stainless-steel and a second and a third sheet (402, 403) comprising the second stainless-steel, the second and the third sheet (402, 403) being provided along two respective main longitudinal edges (404, 405) of the first sheet (401),
- cutting at least a semifinished product (420) from the assembly sheet (410), the semifinished product (420) including a portion of the first sheet (401) a portion of the second sheet (402) and a portion of the third sheet (403),
- bending the portion of the second sheet (402) and the portion of the third sheet (403) with respect to the portion of the first sheet (401) for deriving the cover (601) from the semifinished product (420) so that the portion of the first sheet (401) corresponds to the top side (602) and the portions of the second sheet (402) and the third sheet (403) correspond to the lateral sides (603, 604).

5. The method (1101) according to claim 2, wherein deforming locally the semifinished sheet (450) comprises an operation of deep rolling or burnishing or hammer peening.

6. The method (1001, 1101) according to claim 1, wherein the step of manufacturing the cover (601) comprises additive manufacturing.

7. The method (1001, 1101) according to any of the previous claims, wherein the first stainless-steel is a magnetic stainless-steel.

8. The method (1001, 1101) according to claim 7, wherein the first stainless-steel is ferritic or martensitic.

9. The method (1001, 1101) according to any of the previous claims, wherein the second stainless-steel is a non-magnetic stainless-steel.

10. The method (1001, 1101) according to claim 9, wherein the second stainless-steel is an austenitic stainless steel.

11. The method according to any of the previous claims 1 to 6, wherein the first and the second stainless-steel are non-magnetic stainless-steels and the top side (602) is thinner than the lateral sides (603, 604).

12. The method according to any of the previous claims 1 to 6, wherein the first and the second stainless-steel are magnetic stainless-steels and the top side (602) is thicker than the lateral sides (603, 604).
